(19) Europäisches Patentamt
European Patent Office
Office européen des brevets

(11) Veröffentlichungsnummer : **0 010 272**
**B1**

(12) # EUROPÄISCHE PATENTSCHRIFT

(45) Veröffentlichungstag der Patentschrift : **22.09.82**

(21) Anmeldenummer : **79103940.7**

(22) Anmeldetag : **12.10.79**
**Die Akte enthält technische Angaben, die nach dem Eingang der Anmeldung eingereicht wurden und die nicht in dieser Patentschrift enthalten sind.**

(51) Int. Cl.$^3$ : **C 09 B 29/33**, D 06 P 1/00, C 08 K 5/00, D 21 H 3/00, C 07 D235/04.

(54) **Azoverbindungen, Verfahren zu ihrer Herstellung und ihre Verwendung.**

(30) Priorität : **21.10.78 DE 2845946**

(43) Veröffentlichungstag der Anmeldung : **30.04.80 (Patentblatt 80/09)**

(45) Bekanntmachung des Hinweises auf die Patenterteilung : **22.09.82 Patentblatt 82/38**

(84) Benannte Vertragsstaaten : **CH DE FR GB**

(56) Entgegenhaltungen :
**DE A 18 080 17**
**FR A 20 835 34**
**US A 40 803 21**

(73) Patentinhaber : **HOECHST AKTIENGESELLSCHAFT**
**Postfach 80 03 20**
**D-6230 Frankfurt/Main 80 (DE)**

(72) Erfinder : **Hunger, Klaus, Dr.**
**Johann-Strauss-Strasse 35**
**D-6233 Kelkheim (Taunus) (DE)**
Erfinder : **Pesenacker, Manfred, Dr.**
**Gundelhardtstrasse 2**
**D-6233 Kelkheim (Taunus) (DE)**

**EP 0 010 272 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# Azoverbindungen, Verfahren zur ihrer Herstellung und ihre Verwendung

Gegenstand der Erfindung sind Azoverbindungen der allgemeinen Formel I

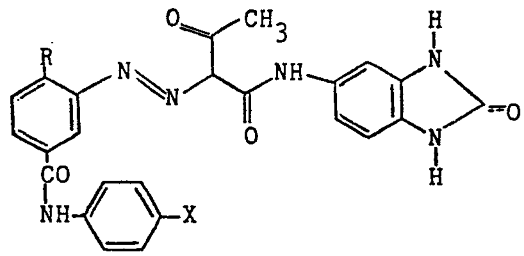

(I)

in der R Chlor, Methyl oder Methoxy, X Carbamoyl oder Acetylamino, und, wenn R Chlor oder Methyl ist, auch Methyl oder Chlor bedeutet.

Die Erfindung betrifft weiterhin ein Verfahren zur Herstellung der genannten Azoverbindungen, das dadurch gekennzeichnet ist, daß man Verbindungen der allgemeinen Formel II

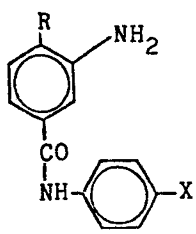

(II)

in der R und X die obengenannten Bedeutungen aufweisen, diazotiert und die erhaltenen Diazoniumverbindungen mit 5-Acetoacetylaminobenzimidazolon-(2), beispielsweise im wäßrigen Medium, vereinigt.

Die Erfindung betrifft weiterhin die Verwendung der erfindungsgemäßen Azoverbindungen als Farbmittel, insbesondere als Pigmente.

Die Diazotierung des Amins der Formel II kann beispielsweise mit Alkalinitriten oder niederen Alkylnitriten mit ausreichend starken Säuren, insbesondere einer Mineralsäure, aber auch mit Nitrosylschwefelsäure erfolgen. Es kann hierbei als auch bei der anschließenden Kupplung von Nutzen sein, einen Zusatz von oberflächenaktiven Mitteln zu verwenden, wie zum Beispiel nichtionogenen, anionaktiven oder kationaktiven Dispergiermitteln.

Diazotierung und Kupplung können auch in Gegenwart geeigneter organischer Lösemittel durchgeführt werden, wie zum Beispiel Eisessig, niederen Alkanolen, Dioxan, Formamid, Dimethylformamid, Dimethylsulfoxid, Pyridin oder N-Methylpyrrolidon. Zur Erzielung der vollen Farbstärke und einer besonders günstigen Kristallstruktur ist es oft zweckmäßig, das Kupplungsgemisch einige Zeit zu erhitzen, beispielsweise zu kochen oder unter Druck bei Temperaturen über 100 °C zu halten, gegebenenfalls in Gegenwart von organischen Lösemitteln, wie niederen Alkanolen, beispielsweise Äthanol, Halogenaromaten wie Chlorbenzol oder Dichlorbenzolen, z.B. o-Dichlorbenzol, Dimethylformamid oder in Gegenwart von Harzseife. Besonders reine und farbstarke Pigmente erhält man mit den erfindungsgemäßen Produkten, wenn man nach der Kupplung die feuchten Preßkuchen oder die getrockneten Pulver einer thermischen Nachbehandlung mit organischen Lösemitteln, wie Alkoholen, vor allem niederen Alkanolen, Pyridin, Eisessig, Dimethylformamid, N-Methylpyrrolidon, Dimethylsulfoxid, Halogenaromaten wie Chlorbenzol oder Dichlorbenzolen, z.B. o-Dichlorbenzol, oder Nitrobenzol unterwirft oder eine Mahlung der Pigmente unter Zusatz von Mahlhilfsmitteln anschließt.

Der Begriff « nieder » im Zusammenhang mit Alkylresten umfaßt Gruppen mit 1 bis 6, insbesondere 1 bis 4 C-Atomen.

Die Herstellung der Pigmente kann auch in Gegenwart eines Trägermaterials, beispielsweise von Schwerspat, erfolgen.

Die neuen Verbindungen sind wasserunlöslich und unlöslich in den üblichen organischen Lösemitteln und eignen sich zur Pigmentierung von Druckfarben, Farblacken und Dispersionsanstrichfarben, zum Färben von Kautschuk, Kunststoffen und natürlichen oder synthetischen Harzen. Insbesondere sind sie zusätzlich für die Einfärbung solcher Kunststoffe, wie z.B. Polyolefine, geeignet, deren Verarbeitungstemperatur häufig über 250 °C liegt. Sie sind ferner geeignet für den Pigmentdruck auf Substraten, insbesondere Textilfasermaterialien oder anderen flächenförmigen Gebilden, wie beispielsweise Papier.

Die Pigmente können auch für andere Anwendungsgebiete, z.B. in fein verteilter Form zum Anfärben von Kunstseide aus Viskose oder Celluloseäthern bzw. -estern, Polyamiden, Polyurethanen, Polyglykolterephthalaten oder Polyacrylnitrilen in der Spinnmasse oder zum Färben von Papier verwendet werden.

Die Pigmente lassen sich in den genannten Medien gut verarbeiten. Die Färbungen weisen sehr gute

Lichtechtheiten und insbesondere hervorragende Hitzestabilität auf und sind gegen den Einfluß von Chemikalien, vor allem Lösemitteln, beständig. Außerdem zeichnen sich die erfindungsgemäßen Pigmente durch einwandfreie Überlackierechtheit in Lacken und Ausblutechtheit in Kunststoffen aus.

Aus der US-A-4 080 321 sind Monoazopigmente bekannt, die durch Diazotieren von gegebenenfalls substituierten Benzoylaminoanilinen und Kuppeln auf Acetoacetylaminobenzimidazolon erhalten werden.

In den folgenden Beispielen beziehen sich die Prozentangaben auf das Gewicht.

Beispiel 1

27 g 4-(3'-Amino-4'-methylbenzoylamino)-benzamid werden in 200 ml Wasser 15 Minuten angerührt, dann 40 ml konz. Salzsäure zugegeben und weitere 45 Minuten gerührt. Anschliessend diazotiert man bei 5-10 °C in 1 Stunde mit 13,5 ml 40 %iger Natriumnitritlösung. Bei 10-20 °C wird 1 Stunde nachgerührt, dann auf ein Volumen von 500 ml gestellt und der Nitritüberschuß mit Amidosulfonsäure zerstört.

24 g 5-Acetoacetylaminobenzimidazolon-(2) werden in 200 ml Wasser angeschlämmt und durch Zugabe von 15 ml 33 %iger Natronlauge gelöst. Diese Lösung läßt man unter gutem Rühren bei 15-18 °C unter die Oberfläche eines vorgelegten Gemisches aus 150 ml Wasser, 20 ml Eisessig, 200 ml 4N Natriumacetatlösung und 5 ml einer 10 %igen Lösung des Reaktionsproduktes von Stearylalkohol und 25 Mol Äthylenoxid in 20 Minuten zulaufen.

Man rührt 30 Minuten nach. Anschließend erfolgt in 1 Stunde der Zulauf der Suspension des Diazoniumsalzes bei 20-25 °C unter die Oberfläche der gefällten Kupplungskomponente. Nach Beendigung der Zugabe der Diazoniumsalz-Suspension rührt man 1 Stunde bei Raumtemperatur nach, heizt dann auf 90 °C, hält die Pigmentsuspension 30 Minuten bei dieser Temperatur, kühlt mit Eis auf 70 °C, saugt ab und wäscht mit Wasser salzfrei.

Das Rohpigment wird bei 70 °C getrocknet und anschließend gemahlen. Es wird dann 20 Minuten in Eisessig bei 35 °C gerührt und nachfolgend abfiltriert. Das Produkt wird mit Äthanol, dann mit Wasser gewaschen und bei 70 °C getrocknet. Das so erhaltene orangefarbene Monoazopigment der Struktur

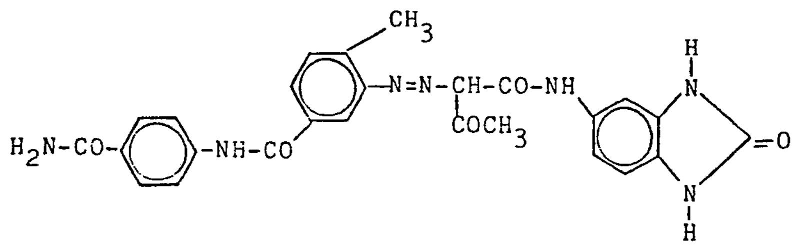

ergibt beim Einarbeiten in einen Alkydharz-Melaminharz-Klarlack gelb-orange Färbungen mit einwandfreier Überlakkierechtheit. Mit dem Produkt pigmentiertes Niederdruckpolyäthylen zeichnet sich durch sehr hohe Hitzebeständigkeit aus. Die Lichtechtheiten sowohl im Lack als auch im Kunststoff sind ebenfalls sehr gut.

Beispiel 2

30 g 4-(4'-Methoxy-3'-aminobenzoylamino)-1-acetylaminobenzol werden in 500 ml Wasser und 40 ml 31 %iger Salzsäure 1 Stunde angerührt. Dann stellt man mit Eis auf 5 °C und diazotiert durch Zugabe von 14 ml 40 %iger Natriumnitritlösung unter die Oberfläche der Mischung und rührt noch 45 Minuten bei 100 °C nach. Anschließend wird der Überschuß an Nitrit mit Amidosulfonsäure zerstört.

Gleichzeitig werden in einem zweiten Gefäß 24 g 5-Acetoacetylamino-benzimidazolon-(2) in 200 ml Wasser angeschlämmt und mit 20 ml 33 %iger Natronlauge gelöst. Diese Lösung läßt man unter gutem Rühren bei 15-18 °C unter die Oberfläche eines vorgelegten Gemisches aus 200 ml Wasser, 200 ml 4N Natriumacetatlösung, 20 ml Eisessig und 10 ml einer 10 %igen Lösung des Reaktionsproduktes von Stearylalkohol und 25 Mol Äthylenoxid in 30 Minuten zulaufen. Die Suspension wird 30 Minuten nachgerührt. Anschliessend erfolgt in 1,5 Stunden die Zugabe der Diazoniumsalz-suspension bei 20-25 °C unter die Oberfläche der Suspension der Kupplungskomponente. Nach Abschluß der Diazoniumsalzzugabe rührt man 1 Stunde bei Raumtemperatur nach, heizt dann auf 90 °C und hält die Pigmentsuspension 30 Minuten bei dieser Temperatur. Anschließend kühlt man mit Eis auf 70 °C, filtriert und wäscht mit Wasser salzfrei. Das Rohpigment wird 1,5 Stunden in Eisessig bei 80 °C gerührt und anschließend abfiltriert. Das Pigment wird zunächst mit Äthanol, dann mit Wasser gewaschen und bei 70 °C getrocknet. Das so erhaltene Monoazopigment der Struktur

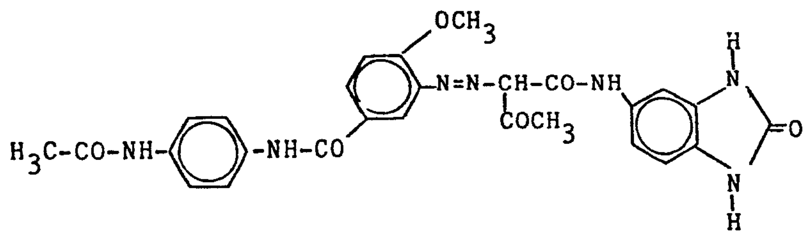

ergibt beim Einarbeiten in einen Alkydharz-Melaminharz-Klarlack gelb-orange Färbungen mit einwandfreier Überlakkierechtheit und ausgezeichneter Lichtechtheit. Mit dem Produkt pigmentiertes Niederdruckpolyäthylen zeichnet sich durch sehr hohe Hitzebeständigkeit aus.

Beispiel 3

24 g 4-(3'-Amino-4'-methylbenzoylamino)-toluol werden in 250 ml Dimethylformamid eingetragen und 30 Minuten verrührt. Nach Zugabe von 40 ml 31 %iger Salzsäure stellt man die Temperatur durch Außenkühlung auf 10 °C ein.

Sobald diese Temperatur erreicht ist, tropft man 100 ml 1N Natriumnitritlösung zu und hält die Temperatur der Mischung unter gutem Rühren 30 Minuten bei max. 10 °C. Jetzt gibt man eine Lösung von 24 g 5-Acetoacetylaminobenzimidazolon-(2) in 250 ml Dimethylformamid zur Lösung der Diazokomponente. Danach werden 100 ml 4N Natriumacetatlösung innerhalb von 30 Minuten zugetropft und 150 ml Wasser zugegeben. Darauf wird eine Stunde unterhalb 25 °C nachgerührt. Anschließend heizt man mit Wasserdampf, filtriert das Produkt bei 80 °C, wäscht es mit Wasser salzfrei und trocknet es bei 60-70 °C. Man erhält 39,5 g eines gelbroten Pigmentes der nachstehenden Konstitution

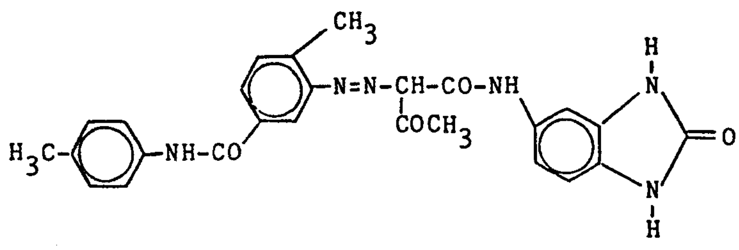

Das Produkt ergibt beim Einarbeiten in einen Alkydharz-Melaminharz-Klarlack rotstichig-gelbe Färbungen mit einwandfreier Überlackierechtheit und hervorragender Lichtechtheit. Mit dem Pigment gefärbtes Niederdruckpolyäthylen zeichnet sich durch hervorragende Hitzebeständigkeit bei sehr guter Lichtechtheit aus.

Entsprechend den Beispielen 1-3 wurden die folgenden weiteren erfindungsgemäßen Azoverbindungen jeweils durch Kupplung des diazotierten Amins auf 5-Acetoacetylaminobenzimidazolon-(2) erhalten :

| Bsp. | Diazokomponente | Farbton |
|---|---|---|
| 4 | 4-(3'-Amino-4'-methylbenzoylamino)-1-acetylamino-benzol | rotstichig gelb |
| 5 | 4-(3'-Amino-4'-methoxybenzoylamino)-benzamid | rotstichig gelb |
| 6 | 4-(3'-Amino-4'-methylbenzoylamino)-chloranilin | rotstichig gelb |
| 7 | 4-(3'-Amino-4'-chlorbenzoylamino)-benzamid | rotstichig gelb |
| 8 | 4-(3'-Amino-4'-chlorbenzoylamino)-acetylaminobenzol | rotstichig gelb |
| 9 | 4-(3'-Amino-4'-chlorbenzoylamino)-chlorbenzol | rotstichig gelb |
| 10 | 4-(3'-Amino-4'-chlorbenzoylamino)-methylbenzol | rotstichig gelb |

**Ansprüche**

1. Verbindungen der Formel

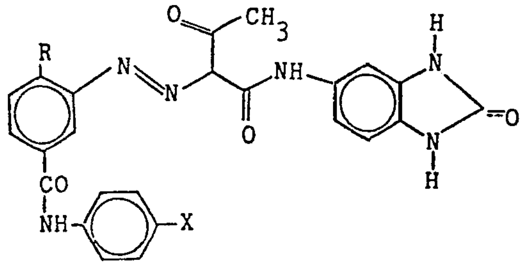

(I)

in der R Chlor, Methyl oder Methoxy, X Carbamoyl oder Acetylamino, und, wenn R Chlor oder Methyl ist, auch Methyl oder Chlor bedeutet.

2. Verbindungen nach Anspruch 1, in denen R für Methyl und X für Carbamoyl, Acetylamino, Methyl oder Chlor steht.

3. Verbindungen nach Anspruch 1, in denen R für Chlor und X für Carbamoyl, Acetylamino, Methyl oder Chlor steht.

4. Verbindungen nach Anspruch 1, in denen R für Methoxy und X für Carbamoyl oder Acetylamino steht.

5. Verfahren zur Herstellung der Verbindungen gemäß Anspruch 1, dadurch gekennzeichnet, daß man Verbindungen der Formel

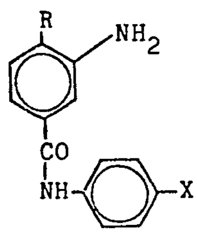

in der R und X die im Anspruch 1 genannten Bedeutungen haben, diazotiert und die erhaltenen Diazoniumverbindungen mit 5-Acetoacetylaminobenzimidazolon-(2) kuppelt.

6. Verwendung der Verbindungen gemäß Anspruch 1 als Farbmittel.

7. Verwendung der Verbindungen gemäß Anspruch 1 als Pigmente.

8. Verwendung der Verbindungen gemäß Anspruch 1 zum Färben bzw. Bedrucken von Kunststoffen, natürlichen und synthetischen Harzen, Hautschuk, Papier, Viskoseseide, Zelluloseestern bzw. -äthern, Polyolefinen, Polyurethanen, Polyacrylnitril oder Polyglykolterephthalaten, sowie zur Herstellung von Druckfarben, Lackfarben oder Dispersionsanstrichfarben

**Claims**

1. Compounds of the formula

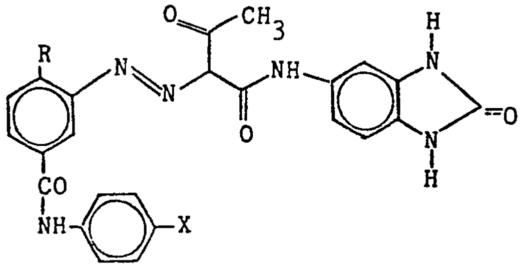

(I)

wherein R is chloro, methyl or methoxy, X is carbamoyl or acetamino, or, when R is chloro or methyl, X is also methyl or chloro.

2. Compounds according to claim 1, wherein R is methyl, and X is carbamoyl, acetamino, methyl or chloro.

3. Compounds according to claim 1, wherein R is chloro and X is carbamoyl, acetamino, methyl or chloro.

4. Compounds according to claim 1, wherein R is methoxy and X is carbamoyl or acetamino.

5. A process for the preparation of the compounds according to claim 1, characterized by diazotizing compounds of the formula

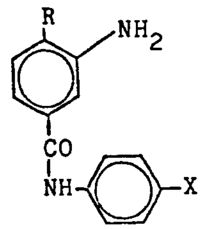

in which R and X have the meanings mentioned in claim 1, and coupling the so-obtained diazonium compounds with 5-acetoacetylaminobenzimidazolone-(2).

6. Application of the compounds according to claim 1 as colourants.

7. Application of the compounds according to claim 1 as pigments.

8. Application of the compounds according to claim 1 for the colouration or printing of plastics, natural and synthetic resins, caoutchouc, paper, rayon, cellulose esters or ethers, polyolefins, polyurethanes, polyacrylonitrile or polyglycol terephthalates as well as for the preparation of printing colours, lacquers or emulsion paints.

**Revendications**

1. Composés répondant à la formule

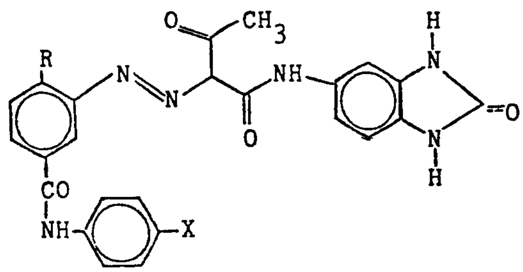

(I)

dans laquelle R représente le chlore ou un radical méthyle ou méthoxy, X représente un radical carbamoyle ou acétylamino et, lorsque R représente le chlore ou un radical méthyle, X peut également être un radical méthyle ou le chlore.

2. Composés selon la revendication 1 dans lesquels R représente un radical méthyle et X représente un radical carbamoyle, acétylamino ou méthyle ou le chlore.

3. Composés selon la revendication 1 dans lesquels R représente le chlore et X représente un radical carbamoyle, acétylamino ou méthyle ou le chlore.

4. Composés selon la revendication 1 dans lesquels R représente un radical méthoxy et X représente un radical carbamoyle ou acétylamino.

5. Procédé de préparation des composés selon la revendication 1, procédé caractérisé en ce qu'on diazote des composés répondant à la formule

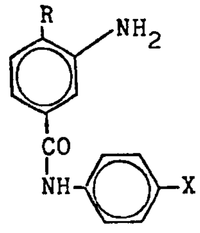

dans laquelle R et X ont les significations données à la revendication 1, et l'on copule les diazoïques obtenus avec l'acétoacétylamino-5 benzimidazolone-2.

6. Application des composés selon la revendication 1 comme colorants.

7. Application des composés selon la revendication 1 comme pigments.

8. Application des composés selon la revendication 1 pour la teinture ou l'impression de matières plastiques, de résines naturelles ou synthétiques, du caoutchouc, du papier, de la rayonne viscose, d'esters ou d'éthers cellulosiques, de polyoléfines, de polyuréthannes, du polyacrylonitrile ou de polyoléfines, de polyuréthannes, du polyacrylonitrile ou de polytéréphtalates de glycols, ainsi que pour la préparation d'encres d'imprimerie, de peintures au vernis ou de peintures-dispersions.